# EUROPÄISCHE PATENTSCHRIFT

(11) **EP 0 654 066 B1**
(45) Veröffentlichungstag und Bekanntmachung des Hinweises auf die Patenterteilung: **16.04.1997**
(21) Anmeldenummer: 93915946.3
(22) Anmeldetag: 17.07.1993
(51) Int. Cl.: C08L 25/12, C08L 25/14

(54) **TRANSPARENTE FORMMASSEN AUS GLUTARIMIDHALTIGEN POLYMEREN UN STYROL-ACRYLNITRIL-COPOLYMEREN**
TRANSPARENT MOULDING COMPOUNDS OF GLUTARIMIDE-CONTAINING POLYMERS AND STYRENE-ACRYLONITRILE COPOLYMERS
MATIERES MOULABLES TRANSPARENTES A BASE DE POLYMERES GLUTARIMIDIQUES ET DE COPOLYMERES DE STYRENE-ACRYLONTITRILE

(30) Priorität: 05.08.1992 DE 4225875
(43) Veröffentlichungstag der Anmeldung: 24.05.1995
(73) Patentinhaber: BASF Aktiengesellschaft, 67063 Ludwigshafen (DE)
(72) Erfinder: BESECKE, Siegmund c/o Besecke, Erich, D-3250 Hameln (DE); DECKERS, Andreas, D-6700 Ludwigshafen (DE); GUENTHERBERG, Norbert, D-6720 Speyer (DE); SEITZ, Friedrich, D-6701 Friedelsheim (DE)
(86) Internationale Anmeldenummer: EP9301892
(87) Internationale Veröffentlichungsnummer: WO9403540

(56) Entgegenhaltungen:
- PATENT ABSTRACTS OF JAPAN vol. 10, no. 208 (C-361)(2264) & JP-A-61 047707

## Beschreibung

Die vorliegende Erfindung betrifft transparente Formmassen, enthaltend
A) 1 bis 99 Gew.-% eines Copolymerisats, erhältlich durch Polymerisation eines Monomerengemisches aus
   a₁) 50 bis 90 Gew.-% eines vinylaromatischen Monomeren,
   a₂) 10 bis 50 Gew.-% Acrylnitril oder Methacrylnitril oder eine Mischung davon, und
   a₃) 0 bis 30 Gew.-% eines weiteren Monomeren,
   und
B) 99 bis 1 Gew.-% eines Polymerisats auf Basis eines vinylaromatischen Monomeren, erhältlich durch
   1) Polymerisation eines Monomerengemisches aus
      b₁) 60 bis 99 Gew.-% einer Mischung bestehend aus
         b₁₁) 100 bis 50 Gew.-% eines vinylaromatischen Monomeren und
         b₁₂) 0 bis 50 Gew.-% Acrylnitril oder Methacrylnitril oder eine Mischung davon,
         und
      b₂) 40 bis 1 Gew.-% eines C₁-C₂₀-Alkylesters der Methacryl- oder Acrylsäure oder Mischungen solcher Ester, und
   2) Umsetzen des nach 1) erhaltenen Polymeren mit einem Amin der allgemeinen Formel I

      RNH₂ I

      in der R C₅-C₈-Cycloalkyl, C₆-C₁₀-Aryl oder C₆-C₁₀-Aryl-C₁-C₄-alkyl bedeutet, wobei diese Reste bis zu dreifach mit Resten, ausgewählt aus der Gruppe bestehend aus C₁-C₄-Alkyl, C₁-C₄-Alkoxy und Halogen, substituiert sein können, mischt.

Außerdem betrifft die Erfindung transparente Formmassen, ihre Verwendung zur Herstellung von Formkörpern sowie Formkörper, enthaltend diese transparenten Formmassen.

Poly-Styrol-Acrylnitril (SAN) ist ein transparenter, gut zu verarbeitender Werkstoff mit interessanten Eigenschaften. Für einige Anwendungszwecke ist die Wärmeformbeständigkeit jedoch nicht ausreichend. Durch Abmischung mit einem weiteren Polymeren, das eine höhere Glasübergangstemperatur als SAN besitzt, ist es möglich, die Warmeformbeständigkeit zu erhöhen und transparente Produkte mit guten mechanischen Eigenschaften zu erhalten. Voraussetzung ist allerdings, daß die Polymeren thermodynamisch verträglich, d.h. mischbar sind.

Chemisch verschiedene Polymere sind im allgemeinen jedoch nicht miteinander verträglich. Eine Übersicht über mischbare Polymersysteme findet sich z.B. bei Paul et al. in J. Macromol. Sci. - Rev. Macromol. Chem.; C 18 (1), 109-168 (1980). Als äußeres Kennzeichen der vollständigen Mischbarkeit wird das Auftreten von nur einer Glasübergangstemperatur oder die Entstehung von klaren (transparenten) Proben oder Filmen angegeben (vgl. J. Brandrup, E.H. Immergut, Polymer Handbook; 3. Auf1. VI; 347-370). Teilverträglichkeit liegt in der Regel dann vor, wenn die Blends zwar zweiphasig sind, die Glasübergangstemperaturen der Mischungspartner jedoch innerhalb des Bereiches der Glasübergangstemperaturen der jeweiligen reinen Polymeren liegen.

Bekannt ist, daß Polymethylmethacrylat (PMMA) und Poly-Styrol-Acrylnitril, wenn der Acrylnitrilgehalt im SAN zwischen 10 und 30 Gew.-% liegt, miteinander molekular mischbar sind (Paul et al.; loc. cit.). Dadurch ergeben sich zwar transparente Polymerblends, die Wärmeformbeständigkeit dieser Blends ist aber unbefriedigend.

Zur Erhöhung der Warmeformbeständigkeit von SAN-Copolymeren kann man nach der EP-A 95 274 diese mit Polyglutarimiden mischen. In der EP-A 95 274 werden beispielsweise Mischungen aus 1 bis 99 Gew.-% Polymethacrylimid (PMI) und 1 bis 99 Gew.-% SAN beansprucht, die je nach Imid-Gehalt des PMI entweder verträgliche (niedriger Imidgehalt) bzw. unverträgliche (hoher Imidgehalt) Mischungen ergeben. Die in der EP-A 95 274 beanspruchten Polyglutarimide, hergestellt aus Einheiten von Methylmethacrylat und Styrol, sind am Imid-Stickstoffatom entweder unsubstituiert oder mit einer Methylgruppe substituiert.

Des weiteren sind PMI-Harze aus der EP-A 234 726 bekannt.

Die verträglichen PMI/SAN-Blends zeichnen sich durch eine zum SAN erhöhte Glasübergangstemperatur unter Erhalt der Transparenz aus. Dagegen besitzen die unverträglichen Blends 2 Glasübergangstemperaturen und sind trüb bzw. opak.

In der EP-A 216 505 wird gelehrt, daß sich die Wärmeformbeständigkeit von SAN-Copolymeren erhöhen läßt, wenn man diese Copolymere mit Polymethacrylimid, erhältlich durch Umsetzung von Polymethylmethacrylat mit Methylamin, mischt. Die in der EP-A 216 505 eingesetzten Polymethacrylimide können bis zu 25 Gew.-% α-Methylstyrol oder Styrol als Comonomereinheiten enthalten. Derartige acrylreiche Abmischungen mit SAN-Copolymeren führen jedoch zu zweiphasigen und somit nicht transparenten Formmassen.

Für die technische Nutzung der SAN-Polymethacrylimid-Formmassen kommt in der Regel nur die Abmischung im Schmelzezustand in Frage. Polymethacrylimide werden im allgemeinen wegen ihrer hohen Glasübergangstemperaturen und ihrer geringen Fließfähigkeiten bei Temperaturen von mindestens 270°C, vorzugsweise 290 bis 310°C, verarbeitet. Unter diesen Bedingungen weisen die SAN-PMI-Formmassen in der Regel eine Gelbfärbung auf, die auf eine Verfärbung der SAN-Komponente bei diesen hohen Verarbeitungstemperaturen zurückzuführen ist.

Aufgabe der vorliegenden Erfindung war es daher, ein Verfahren zur Herstellung von transparenten Formmassen mit erhöhter Wärmeformbeständigkeit durch Abmischen von SAN-Copolymeren mit Vinylaromaten enthaltenden Polymethacryl- oder Polyacrylimiden zur Verfügung zu stellen, wobei die transparenten Formmassen eine - im Vergleich zu reinem Polymethacryl- oder Polyacrylimid als Abmischkomponente - verringerte Gelbfärbung aufweisen.

Demgemäß wurde das eingangs definierte Verfahren gefunden.

Ferner wurden transparente Formmassen, deren Verwendung zur Herstellung von Formkörpern sowie Formkörper, enthaltend diese transparenten Formmassen, gefunden.

Die als Komponente A) enthaltenden Copolymerisate sind erhältlich durch Polymerisation eines Monomerengemisches in an sich bekannter Weise aus
- 50 bis 90 Gew.-%,: vorzugsweise 60 bis 80 Gew.-%, eines vinylaromatischen Monomeren,
- 10 bis 50 Gew.-%,: vorzugsweise 20 bis 40 Gew.-%, Acrylnitril oder Methacrylnitril oder eine Mischung davon, und
- 0 bis 30 Gew.-%,: vorzugsweise 0 bis 20 Gew.-%, eines weiteren Monomeren.

Als vinylaromatische Monomere eignen sich vorzugsweise Styrol, α-Methylstyrol, tert.-Butylstyrol, Monochlorstyrol und Vinyltoluol, besonders bevorzugt Styrol und α-Methylstyrol.

Als weitere Monomere eignen sich C₁-C₂₀-Alkylester der Methacryl- und Acrylsäure, Maleinsäureanhydrid, gewünschtenfalls substituierte Amide der Methacryl- und Acrylsäure sowie Maleinsäureimide, bevorzugt Maleinsäureanhydrid.

Die Menge der Komponente A), bezogen auf das Gesamtgewicht der transparenten Formmassen, beträgt 1 bis 99 Gew.-%, bevorzugt 30 bis 70 Gew.-%.

Die Herstellung der Komponente A) führt man im allgemeinen nach bekannten Polymerisationsverfahren wie Lösungs-, Masse- oder Suspensionspolymerisation durch. Solche Verfahren sind beispielsweise in Kunststoffhandbuch, Hrsg. Vieweg und Daumüller, Band V; Polystyrol, Carl-Hanser-Verlag, München 1969, S. 124 ff. beschrieben.

Die ais Komponente B) enthaltenen Polymerisate auf Basis eines vinylaromatischen Monomers sind erhältlich durch
1) Polymerisation eines Monomerengemisches aus
   60 bis 99 Gew.-%, vorzugsweise 60 bis 90 Gew.-%, einer Mischung aus
   b₁₁) 100 bis 50 Gew.-%, vorzugsweise 100 bis 60 Gew.-%, eines vinylaromatischen Monomeren und
   b₁₂) 0 bis 50 Gew.-%, vorzugsweise 0 bis 40 Gew.-%, Acrylnitril oder Methacrylnitril oder eine Mischung davon,
   und
   40 bis 1 Gew.-%, vorzugsweise 40 bis 10 Gew.-%, eines C₁-C₂₀-Alkylesters der Methacryl- oder Acrylsäure, oder Mischungen solcher Ester,
   und anschließendes
2) Umsetzen des nach 1) erhaltenen Polymerisats mit einem Amin der allgemeinen Formel I

   RNH₂ I

   in der R C₅-C₈-Cycloalkyl, C₆-C₁₀-Aryl oder C₆-C₁₀-Aryl-C₁-C₄-alkyl bedeutet, wobei diese Reste bis zu dreifach mit Resten, ausgewählt aus der Gruppe bestehend aus C₁-C₄-Alkyl, C₁-C₄-Alkoxy und Halogen, substituiert sein können.

Als vinylaromatische Monomere eignen sich vorzugsweise Styrol, α-Methylstyrol, tert.-Butylstyrol, Monochlorstyrol und Vinyltoluol, besonders bevorzugt Styrol und α-Methylstyrol.

Als C₁-C₂₀-Alkylester der Methacrylsäure kommen bevorzugt die C₁-C₄-Alkylester wie Methylmethacrylat ("MMA"), Ethylmethacrylat, Propylmethacrylat, n-Butylmethacrylat, Isobutylmethacrylat und tert.-Butylmethacrylat in Betracht, wobei Methylmethacrylat besonders bevorzugt ist, sowie Mischungen dieser Monomeren.

Als C₁-C₂₀-Alkylester der Acrylsäure verwendet man bevorzugt die C₁-C₄-Alkylester wie Methylacrylat ("MA"), Ethylacrylat, Propylacrylat, n-Butylacrylat, Isobutylacrylat und tert.-Butylacrylat, wobei Methylacrylat besonders bevorzugt ist, sowie Mischungen dieser Monomeren.

Als besonders vorteilhaft haben sich nach bisherigen Beobachtungen Polymerisate aus 65 bis 80 Gew.-% Styrol und 20 bis 35 Gew.-% Methylmethacrylat mit einem Molekulargewicht (Gewichtsmittelwert M_{w}) von 50.000 bis 200.000 g/mol erwiesen.

Der Zusatz von Acrylnitril und/oder Methacrylnitril bewirkt in der Regel eine Erhöhung der Spannungsrißbeständigkeit.

Polymerisate, hergestellt mit einem Gehalt an vinylaromatischen Monomeren von weniger als 50 Gew.-%, sind im allgemeinen nach der Imidierung mit der Komponente A) nicht verträglich und ergeben keine transparenten Blends.

Polymerisate, hergestellt mit einem Gehalt an Acrylaten und Methacrylaten von mehr als 40 Gew.-%, sind in der Regel nach der Imidierung mit der Komponente A) nicht verträglich und ergeben keine transparenten Blends.

Die Menge der Komponente B), bezogen auf das Gesamtgewicht der transparenten Formmassen, beträgt erfindungsgemäß 99 bis 1 Gew.-%, bevorzugt 70 bis 30 Gew.-%.

Die Herstellung der Komponente B) führt man im allgemeinen nach bekannten Polymerisationsverfahren wie Masse-, Lösungs- oder Perlpolymerisation durch. Solche Verfahren sind beispielsweise in Kunststoffhandbuch, Bd. 9, Vieweg und Esser; Polymethylmethacrylat, Carl-Hanser-Verlag, München, 1975, S. 36 ff beschrieben.

Als Imidierungsreagenz I, RNH₂, kommen primäre Amine zur Anwendung, die ausgewählt sind aus der Gruppe bestehend aus C₅-C₈-Cycloalkylaminen, C₆-C₁₀-Arylaminen, C₆-C₁₀-Aryl-C₁-C₄-alkylaminen, wobei die Cycloalkyl-, Aryl- und Aralkylreste der Amine bis zu dreifach mit Resten, ausgewählt aus der Gruppe bestehend aus C₁-C₄-Alkyl, C₁-C₄-Alkoxy und Halogen wie Fluor, Chlor und Brom, substituiert sein können.

Beispielhaft seien genannt Cyclopentylamin, Cyclohexylamin, Cycloheptylamin, Cyclooctylamin, Anilin, 2-, 4-Methylanilin, 2-, 4-Methoxyanilin, 2-, 4-Chloranilin, 2-, 4-Bromanilin, Benzylamin, Phenethylamin und Phenylpropylamin, besonders bevorzugt Cyclohexylamin.

Die Imidierung kann man in an sich bekannter Weise, beispielsweise lösungsmittelfrei in einem Extruder analog zu dem in der US-A 4 246 374 beschriebenen Verfahren oder in einem Lösungsmittel durchführen.

Führt man die Imidierung nicht in einem Extruder durch, so besteht eine bevorzugte Ausführungsform darin, daß man den durch die Aminolyse der Estergruppen entstandenen Alkohol aus dem Reaktionsgemisch entfernt. Besonders vorteilhaft kann man dies durch kontinuierliches Abdestillieren des Alkohols erreichen. Hierzu ist es zweckmäßig, daß man für die Imidierung ein Amin verwendet, das einen höheren Siedepunkt aufweist als der aus dem Reaktionsgemisch zu entfernende Alkohol, so daß keine oder nur unwesentliche Mengen Amin mitentfernt werden.

Prinzipiell kann man auch Amine mit gleichem oder niedrigerem Siedepunkt als der abzudestillierende Alkohol einsetzen, indem man das mitentfernte Amin beispielsweise durch weitere Destillation vom Alkohol abtrennt und wieder in das Reaktionsgemiscn einbringt. Jedoch wird die hier vorgeschlagene Variante (Siedepunkt Amin > Siedepunkt Alkohol) aufgrund der einfacheren Reaktionsführung bevorzugt.

Die Reaktion führt man in der Regel so durch, daß man eine Mischung bestehend aus Copolymerisat 1) und Amin bevorzugt in einem Lösungsmittel unter Sauerstoffausschluß zum Sieden erhitzt und den während der Reaktion entstehenden Alkohol durch Destillation kontinuierlich aus dem Reaktionsgemisch entfernt.

Das Amin kann man dabei gleich zu Beginn der Reaktion vorlegen oder beispielsweise kontinuierlich in dem Maße wie es verbraucht wird zugeben.

Das Gewichtsverhältnis von eingesetztem Amin zu Copolymerisat 1) wählt man im Bereich von 1:1 bis 400:1, bevorzugt von 1:1 bis 200:1.

Als Lösungsmittel kann man prinzipiell alle aprotischen, polaren Lösungsmittel wie
N,N'-disubstituierte, cyclische oder acyclische Carbonsäureamide wie Dimethylformamid, Diethylformamid, Dimethylacetamid, Diethylacetamid,
N-Methyl-2-pyrrolidon, N-Ethyl-2-pyrrolidon,
N,N,N',N'-tetrasubstituierte, cyclische oder acyclische Harnstoffe wie Tetramethylharnstoff,
N-substituierte, cyclische oder acyclische (Poly)Amine wie Di-cyclohexylmethylamin, Dimethylcyclohexylamin, N,N,N',N'-Tetramethylethylendiamin, N,N,N',N'-Tetramethylhexamethylendiamin,
hochsiedende Ether wie Ethylenglykoldimethylether, Diethylenglykoldimethylether,
Alkylencarbonate wie Ethylencarbonat, Propylencarbonat,
sowie andere übliche aprotische und polare Lösungsmittel wie Hexamethylphosphorsäuretriamid, Nitroalkane wie Nitromethan, Dimethylsulfoxid, Diphenylsulfoxid und Sulfolan verwenden, wobei N-Methylpyrrolidon bevorzugt ist.

Das Gewichtsvernältnis von verwendetem Lösungsmittel zu Polymer liegt in der Regel im Bereich von 1:1 bis 100:1, bevorzugt von 1:1 bis 10:1.

Die Reaktionstemperatur wählt man im allgemeinen im Bereich von 100 bis 280°C, bevorzugt im Bereich von 120 bis 220°C.

Der Reaktionsdruck ist in der Regei unkritisch. Man arbeitet im allgemeinen im Bereich von 80 bis 250 kPa, bevorzugt unter Atmosphärendruck.

Der pH-Wert liegt wegen des eingesetzten Amins in der Regel oberhalb von 7.

Die Reaktionszeit liegt in der Regel im Bereich von 1 bis 20 h, bevorzugt 1 bis 10 h.

Des weiteren kann man dem Reaktionsgemisch Katalysatoren in Mengen im Bereich von 0 bis 2 Gew.-%, bezogen auf das eingesetzte Polymer, zur Beschleunigung der Reaktion zusetzen. Beispielhaft seien genannt
tertiäre Amine wie Tricyclohexylamin,
substituierte Guanidine wie 1,1,3,3-Tetramethylguanidin, 1,3-Diphenylguanidin,
tetrasubstituierte Alkylammoniumverbindungen wie Trimethylstearylammoniumchlorid,
organische Titanverbindungen wie Tetrapropoxytitan, Tetrabutoxytitan,
organische Zinnverbindungen wie Dibutylzinnoxid, Dibutylzinndidodecanat,
aromatische Amine und Imide wie Chinolin, Isochinolin, 4-Benzylpyridin, 4-Phenylpyridin, 2-Hydroxypyridin, 1,3-, 1,4- und 2,3-Benzodiazin, 2,2'-, 2,3'- und 2,4'-Bipyridyl,
Imide wie N,N'-Dicyclohexylcarbodiimid,
sowie Antimontrioxid, Zinndioxid, Natriumamid, Natrium- und Kaliumalkoholate wie Natrium- und Kaliummethanolat, Ammoniumchlorid und Ammoniumiodid.

Die Herstellung der erfindungsgemäßen transparenten Formmassen kann durch Schmelzemischen der Komponente A) und B) in üblichen Mischvorrichtungen wie Knetern, Banburymischern, Ein- oder Zweischneckenextrudern, oder auch durch Mischen der Komponente A) und B) in Lösung mit anschließendem Verdampfen des Lösungsmittels oder durch Fällen mit oder in einem Fällmittel erfolgen.

Die Herstellung von Formkörpern, insbesondere sterilisierbare medizinische Gegenstände, Folien oder Fasern kann man nach bekannten Verfahren wie Extrusion oder Spritzgießen durchführen.

Die erfindungsgemäßen transparenten Formmassen und die daraus hergestellten Formkörper, Folien oder Fasern können übliche Zusatzstoffe und Verarbeitungshilfsmittel enthalten. Deren Anteil beträgt in der Regel bis zu 5, vorzugsweise bis zu 2 Gew.-%, bezogen auf das Gesamtgewicht der Copolymerisate.

Übliche Zusatzstoffe sind beispielsweise Stabilisatoren und Oxidationsverzögerer, Mittel gegen Wärmezersetzung und Zersetzung durch ultraviolettes Licht, Gleit- und Entformungsmittel, Farbstoffe, Pigmente, Weichmacher und Antistatika.

Oxidationsverzögerer und Wärmestabilisatoren, die den thermoplastischen Massen gemäß der Erfindung zugesetzt werden können, sind z.B. sterisch gehinderte Phenole, Hydrochinone, Phosphite und Abkömmlinge und substituierte Vertreter dieser Gruppe und Mischungen dieser Verbindungen, vorzugsweise in Konzentrationen bis zu 1 Gew.-%, bezogen auf das Gewicht der Mischung.

Beispiele für UV-Stabilisatoren sind substituierte Resorcine, Salicylate, Benzotriazole und Benzophenone, die man im allgemeinen in Mengen bis zu 1 Gew.-% einsetzen kann.

Gleit- und Entformungsmittel, die man in der Regel bis zu 1 Gew.-% der thermoplastischen Masse zusetzen kann, sind beispielsweise Stearinsäure, Stearylalkohol, Stearinsäurealkylester und amide sowie Ester des Pentaerythrits mit langkettigen Fettsäuren. Geeignete Farbstoffe sind organische Farbstoffe, beispielsweise Anthrachinonrot, organische Pigmente und Lacke wie Phthalocyaninblau, anorganische Pigmente wie Titandioxid und Cadmiumsulfid. Als Weichmacher seien beispielhaft Dioctylphthalat, Dibenzylphthalat und Butylbenzylphthalat genannt.

Als weitere Zusatzstoffe kann man Flammschutzmittel in der Regel in Mengen von 1 bis 40 Gew.-% einsetzen.

Solche Flammschutzmittel sind beispielsweise organische Phosphorverbindungen wie die Ester der Phosphorsäure, phosphorigen Säure und von Phosphon- und Phosphinsäure sowie tertiäre Phosphine und Phosphinoxide. Als Beispiel sei Triphenylphosphinoxid genannt.

Als Flammschutzmittel sind auch solche Verbindungen geeignet, die Phosphor-Stickstoff-Bindungen enthalten, wie Phosphonnitrilchlorid, Phosphorsäureesteramide, Phosphorsäureamide, Phosphinsäureamide, Tris-(aziridinyl)-phosphinoxid oder Tetrakis-(hydroxymethyl)-phosphoniumchlorid.

Die erfindungsgemäßen transparenten Formmassen weisen gegenüber solchen aus dem Stand der Technik eine sehr gute Transparenz und eine verringerte Gelbfärbung auf.

### Beispiele

Bei den verwendeten Styrol-Acrylnitril-Copolymeren (Komponente A)) handelte es sich um statistische Copolymere mit der folgenden Zusammensetzung:

**Tabelle 1**

| Zusammensetzung und Eigenschaften der verwendeten SAN-Copolymeren | | | | |
|---|---|---|---|---|
| | AN¹⁾ [Gew.-%] | Styrol [Gew.-%] | VZ²⁾ | T_{g}³⁾ |
| SAN-1 | 25 | 75 | 81 | 107 |
| SAN-2 | 33 | 67 | 78 | 109 |

| | | | | |
|---|---|---|---|---|
| ¹⁾ AN = Acrylnitril; | | | | |
| ²⁾ VZ = Viskositätszahl; | | | | |
| ³⁾ T_{g} = Glasübergangstemperatur nach DSC | | | | |

### Herstellung von imidierten Styrol-MMA-Copolymeren (Komponente B))

Auf einem Zweiwellenextruder (ZSK-40 Fa. Werner & Pfleiderer)) mit gleichlaufenden, kämmenden Schnecken wurde das entspr. Copolymerisat (siehe Tabelle 2) kontinuierlich (10 kg/h bei einer Temperatur von 270°C mit 5 kg/h Cyclohexylamin umgesetzt. Nach der Reaktionszone wurde die Polymerschmelze auf dem gleichen Extruder entgast und granuliert.

### Vergleichsbeispiel analog zu EP-B 234,726 ≙ PMI-3

In einem Autoklaven wurde eine Lösung von 200 g des entsprechenden Copolymerisats (s. Tabelle 2) in 600 g Toluol/Methanol (Gew.-Verhältnis 90/10) mit 8 g Methylamin versetzt und auf 230°C erhitzt. Nach 8 h wurde abgekühlt und das gebildete Polymer in Methanol ausgefällt und anschließend getrocknet.

**Tabelle 2**

| Zusammensetzung und Eigenschaften von imidierten Styrol-MMA-Copolymeren (Komponente B) | | | | |
|---|---|---|---|---|
| | Styrol¹⁾ [Gew.-%] | MMA¹⁾ [Gew.-%] | Imidierungsgrad²⁾ [%] | T_{g}³⁾ [°C] |
| erfindungsgemäß | | | | |
| PMI-1 | 75 | 25 | 84 | 117 |
| zum Vergleich | | | | |
| PMI-2 | 50 | 50 | 78 | 134 |
| PMI-3 | 75 | 25 | 79 | 115 |

| | | | | |
|---|---|---|---|---|
| ¹⁾ Styrol- bzw. MMA-Gehalt im Ausgangspolymeren | | | | |
| ²⁾ theoretischer Imidierungsgrad (ber. aus dem N-Gehalt) | | | | |
| ³⁾ Glasübergangstemperatur nach DSC | | | | |

### Herstellung eines imidierten MMA/Styrol/Acrylnitril-Terpolymeren (Komponente B))

In einem 2-1-Dreihalskolben mit Rührer, Füllkörperkolonne und Innenthermometer wurde ein Gemisch aus 200 g eines Polymers, hergestellt aus 37,5 Gew.-% MMA, 37,5 Gew.-% Styrol und 25 Gew.-% AN, 150 g Cyclohexylamin und 600 g N-Methylpyrrolidon unter Stickstoff zum Sieden erhitzt.

Nach ca. 30 min war das gesamte Polymer gelöst und die Innentemperatur betrug 140°C. Im Verlauf von 1 h sank die Kopftemperatur von anfangs 135°C auf 65°C (Siedepunkt des Methanols) ab. Das entstandene Methanol wurde nun in einem Zeitraum von 6 h so langsam abgenommen, daß die Kopftemperatur nicht über 70°C stieg. Anschließend wurde das im Überschuß vorhandene Amin über Kopf abdestilliert. Das auf diese Weise gebildete Polymethacrylimid wurde anschließend in Methanol ausgefällt und danach getrocknet.

**Tabelle 3**

| Zusammensetzung und Eigenschaften eines imidierten MMA/Styrol/Acrylnitril-Terpolymeren (Komponente B) | | | | | |
|---|---|---|---|---|---|
| | AN¹⁾ | Styrol¹⁾ [Gew.-%] | MMA¹⁾ | Imidierungsgrad²⁾ [%] | T_{g}³⁾ [°C] |
| PMI-4 | 25 | 37,5 | 37,5 | 88 | 151 |

| | | | | | |
|---|---|---|---|---|---|
| ¹⁾ Styrol-, AN- bzw. MMA-Gehalt im Ausgangspolymeren | | | | | |
| ²⁾ theoretischer Imidierungsgrad (ber. aus dem N-Gehalt) | | | | | |
| ³⁾ Glasübergangstemperatur nach DSC | | | | | |

### Herstellung der Polymermischungen

Zur Herstellung der erfindungsgemäßen Polymerblends wurden die beiden Komponenten entsprechend der nachfolgenden Tabelle 4 in einem Mischungsverhältnis von 50:50 Gew.-% auf einem Zweiwellenextruder ZSK-25 (Fa. Werner & Pfleiderer) bei 270°C gemischt und granuliert.

Die Prüfung der optischen Eigenschaften erfolgte an gepreßten Rundscheiben nach DIN 5036. Die Messung der Glasübergangstemperatur T_{g} erfolgte mit einem DSC-Gerät der Fa. Mettler (DSC-30).

**Tabelle 4**

| Zusammensetzung und Eigenschaften von SAN/PMI-Blends | | | | | |
|---|---|---|---|---|---|
| Nr. | Komponente A | Komponente B | Transparenz | Farbe | T_{g} [°C] |
| erfindungsgemäß | | | | | |
| 1. | SAN-1 | PMI-1 | klar | hellgelb | 112 |
| 2. | SAN-2 | PMI-1 | klar | hellgelb | 114 |
| 3. | SAN-1 | PMI-4 | klar | hellgelb | 121 |

| zum Vergleich | | | | | |
|---|---|---|---|---|---|
| 4. | SAN-1 | PMI-2 | trüb | gelb | 108/115 |
| 5. | SAN-2 | PMI-2 | trüb | gelb-braun | 111/126 |
| 6. | SAN-1 | PMI-3 | trüb | gelb | 108/113 |
| 7. | SAN-2 | PMI-3 | trüb | gelb | 108/113 |

## Patentansprüche

1. Transparente Formmassen, enthaltend
A) 1 bis 99 Gew.-% eines Copolymerisats, erhältlich durch Polymerisation eines Monomerengemisches aus
a₁) 50 bis 90 Gew.-% eines vinylaromatischen Monomeren,
a₂) 10 bis 50 Gew.-% Acrylnitril oder Methacrylnitril oder eine Mischung davon, und
a₃) 0 bis 30 Gew.-% eines weiteren Monomeren,
und
B) 99 bis 1 Gew.-% eines Polymerisats auf Basis eines vinylaromatischen Monomeren, erhältlich durch
1) Polymerisation eines Monomerengemisches aus
b₁) 60 bis 99 Gew.-% einer Mischung bestehend aus
b₁₁) 100 bis 50 Gew.-% eines vinylaromatischen Monomeren und
b₁₂) 0 bis 50 Gew.-% Acrylnitril oder Methacrylnitril oder eine Mischung davon,
und
b₂) 40 bis 1 Gew.-% eines C₁-C₂₀-Alkylesters der Methacryl- oder Acrylsäure oder Mischungen solcher Ester, und
2) Umsetzen des nach 1) erhaltenen Polymeren mit einem Amin der allgemeinen Formel I
RNH₂ I
in der R C₅-C₈-Cycloalkyl, C₆-C₁₀-Aryl oder C₆-C₁₀-Aryl-C₁-C₄-alkyl bedeutet, wobei diese Reste bis zu dreifach mit Resten, ausgewählt aus der Gruppe bestehend aus C₁-C₄-Alkyl, C₁-C₄-Alkoxy und Halogen, substituiert sein können.

2. Verfahren zur Herstellung von transparenten Formmassen gemäß Anspruch 1, dadurch gekennzeichnet, daß man
A) 1 bis 99 Gew.-% eines Copolymerisats, erhältlich durch Polymerisation eines Monomerengemisches aus
a₁) 50 bis 90 Gew.-% eines vinylaromatischen Monomeren,
a₂) 10 bis 50 Gew.-% Acrylnitril oder Methacrylnitril oder eine Mischung davon, und
a₃) 0 bis 30 Gew.-% eines weiteren Monomeren,
und
B) 99 bis 1 Gew.-% eines Polymerisats auf Basis eines vinylaromatischen Monomeren, erhältlich durch
1) Polymerisation eines Monomerengemisches aus
b₁) 60 bis 99 Gew.-% einer Mischung bestehend aus
b₁₁) 100 bis 50 Gew.-% eines vinylaromatischen Monomeren und
b₁₂) 0 bis 50 Gew.-% Acrylnitril oder Methacrylnitril oder eine Mischung davon,
und
b₂) 40 bis 1 Gew.-% eines C₁-C₂₀-Alkylesters der Methacryl- oder Acrylsäure oder Mischungen solcher Ester, und
2) Umsetzen des nach 1) erhaltenen Polymeren mit einem Amin der allgemeinen Formel I
RNH₂ I
in der R C₅-C₈-Cycloalkyl, C₆-C₁₀-Aryl oder C₆-C₁₀-Aryl-C₁-C₄-alkyl bedeutet, wobei diese Reste bis zu dreifach mit Resten, ausgewählt aus der Gruppe bestehend aus C₁-C₄-Alkyl, C₁-C₄-Alkoxy und Halogen, substituiert sein können, mischt.

3. Verwendung der transparenten Formmassen gemäß Anspruch 1 zur Herstellung von Formkörpern.

4. Formkörper, erhältlich aus den transparenten Formmassen gemäß Anspruch 1.

## Claims

1. A transparent molding material containing
A) 1 to 99 % by weight of a copolymer that can be obtained by polymerizing a monomer mixture comprising
a₁) 50 to 90 % by weight of an aromatic vinyl monomer,
a₂) 10 to 50 % by weight of acrylonitrile or methacrylonitrile, or a mixture thereof, and
a₃) 0 to 30 % by weight of a further monomer,
and
B) 99 to 1 % by weight of a polymer based on an aromatic vinyl monomer that can be obtained by
1) polymerizing a monomer mixture comprising
b₁) 60 to 99 % by weight of a mixture comprising
b₁₁) 100 to 50 % by weight of an aromatic vinyl monomer, and
b₁₂) 0 to 50 % by weight of acrylonitrile or methacrylonitrile, or a mixture thereof,
and
b₂) 40 to 1 % by weight of a C₁-C₂₀alkyl ester of methacrylic or acrylic acid, or mixtures of such esters, and
2) reacting the polymer obtained according to 1) with an amine of the formula I
RNH₂ I
in which R is C₅-C₈cycloalkyl, C₆-C₁₀aryl or C₆-C₁₀aryl/C₁-C₄alkyl, these radicals being able to be up to trisubstituted by radicals selected from the group consisting of C₁-C₄alkyl, C₁-C₄alkoxy and halogen.

2. A process for preparing transparent molding materials as claimed in claim 1, wherein
A) 1 to 99 % by weight of a copolymer that can be obtained by polymerizing a monomer mixture comprising
a₁) 50 to 90 % by weight of an aromatic vinyl monomer,
a₂) 10 to 50 % by weight of acrylonitrile or methacrylonitrile or a mixture thereof, and
a₃) 0 to 30 % by weight of a further monomer,
is mixed with
B) 99 to 1 % by weight of a polymer based on an aromatic vinyl monomer that can be obtained by
1) polymerizing a monomer mixture comprising
b₁) 60 to 99 % by weight of a mixture comprising
b₁₁) 100 to 50 % by weight of an aromatic vinyl monomer, and
b₁₂) 0 to 50 % by weight of acrylonitrile or methacrylonitrile or a mixture thereof,
and
b₂) 40 to 1 % by weight of a C₁-C₂₀alkyl ester of methacrylic or acrylic acid or mixtures of such esters, and
2) reacting the polymer obtained according to 1) with an amine of the formula I
RNH₂ I
in which R is C₅-C₈cycloalkyl, C₆-C₁₀aryl or C₆-C₁₀aryl/C₁-C₄alkyl, these radicals being able to be up to trisubstituted by radicals selected from the group consisting of C₁-C₄alkyl, C₁-C₄alkoxy and halogen.

3. The use of the transparent molding material as claimed in claim 1 for producing molded articles.

4. A molded article that can be obtained from the transparent molding material as claimed in claim 1.

## Revendications

1. Masses à mouler, transparentes, qui contiennent
A) 1 à 99% en poids d'un copolymère, que l'on peut obtenir par la polymérisation d'un mélange de monomères constitué de
a₁) 50 à 90% en poids d'un monomère vinylaromatique,
a₂) 10 à 50% en poids d'acrylonitrile ou de méthacrylonitrile,
ou d'un mélange de ceux-ci et
a₃) 0 à 30% en poids d'un autre monomère
et
B) 99 à 1% en poids d'un polymère, à base d'un composé vinylaromatique, que l'on peut obtenir par
1) la polymérisation d'un mélange de monomères constitué de
b₁) 60 à 99% d'un mélange composé de
b₁₁) 100 à 50% en poids d'un monomères vinylaromatique
et
b₁₂) 0 à 50% en poids d'acrylonitrile, ou de méthacrylonitrile, ou d'un mélange de ceux-ci
et
b₂) 40 à 1% en poids d'un ester alkylique en C₁ à C₂₀ de l'acide méthacrylique ou de l'acide acrylique, ou de mélanges de tels esters et
2) la réaction du polymère obtenu selon 1) avec une amine de la formule générale
RNH₂ I
dans laquelle R représente un radical cycloalkyle en C₅ à C₈, aryle en C₆ à C₁₀, ou aryl(C₆-C₁₀)alkyle-(C₁-C₄), où ces radicaux peuvent être jusqu'à trois fois substitués par des groupes choisis parmi les radicaux alkyle en C₁ à C₄, alcoxy en C₁ à C₄ et les atomes d'halogènes.

2. Procédé de préparation de masses à mouler, transparentes suivant la revendication 1, caractérisé en ce que l'on mélange
A) 1 à 99% en poids d'un copolymère, que l'on peut obtenir par la polymérisation d'un mélange de monomères constitué de
a₁) 50 à 90% en poids d'un monomère vinylaromatique,
a₂) 10 à 50% en poids d'acrylonitrile ou de méthacrylonitrile,
ou d'un mélange de ceux-ci et
a₃) 0 à 30% en poids d'un autre monomère
et
B) 99 à 1% en poids d'un polymère, à base d'un composé vinylaromatique, que l'on peut obtenir par
1) la polymérisation d'un mélange de monomères constitué de
b₁) 60 à 99% d'un mélange composé de
b₁₁) 100 à 50% en poids d'un monomères vinylaromatique
et
b₁₂) 0 à 50% en poids d'acrylonitrile, ou de méthacrylonitrile, ou d'un mélange de ceux-ci
et
b₂) 40 à 1% en poids d'un ester alkylique en C₁ à C₂₀ de l'acide méthacrylique ou de l'acide acrylique, ou de mélanges de tels esters et
2) la réaction du polymère obtenu selon 1) avec une amine de la formule générale
RNH₂ I
dans laquelle R représente un radical cycloalkyle en C₅ à C₈, aryle en C₆ à C₁₀, ou aryl(C₆-C₁₀)alkyle-(C₁-C₄), où ces radicaux peuvent être jusqu'à trois fois substitués par des groupes choisis parmi les radicaux alkyle en C₁ à C₄, alcoxy en C₁ à C₄ et les atomes d'halogènes.

3. Utilisation des masses à mouler, transparentes suivant la revendication 1, pour la fabrication d'articles moulés.

4. Articles moulés que l'on peut obtenir, à partir des masses à mouler, transparentes suivant la revendication 1.
